# EUROPEAN PATENT SPECIFICATION

(11) **EP 0 502 649 B1**
(45) Date of publication and mention of the grant of the patent: **20.12.1995**
(21) Application number: 92301665.3
(22) Date of filing: 27.02.1992
(51) Int. Cl.: H04N 5/04

(54) **Automatic phase adjustor for video camera**
Automatischer Phaseneinsteller für eine Fernsehkamera
Ajusteur de phase automatique pour une caméra vidéo

(30) Priority: 07.03.1991 JP 41712/91
(43) Date of publication of application: 09.09.1992
(73) Proprietor: MATSUSHITA ELECTRIC INDUSTRIAL CO., LTD., Kadoma-shi Osaka (JP)
(72) Inventor: Sano, Toshiyuki, Kohoku-ku, Yokohama-shi (JP); Yano, Katsumi, Midori-ku, Yokohama-shi (JP); Kobayashi, Kikuo, Hodogaya-ku, Yokohama-shi (JP)
(74) Representative: Votier, Sidney David

(56) References cited:
- US-A- 4 222 074
- US-A- 4 445 135
- US-A- 4 737 848

## Description

### BACKGROUND OF THE INVENTION

### FIELD OF THE INVENTION

The present invention relates to an automatic phase adjustor for a video camera having a solid-state imaging element which adjustor is capable of automatically adjusting a horizontal phase difference between a video output signal of the solid imaging element and a synchronous signal of the video camera.

### DESCRIPTION OF THE PRIOR ART

Conventionally, this kind of signal phase adjusting has been carried out on the criterion of a start phase of a horizontal clock supplied from a timing generator for driving an imaging element. The signal phase difference is adjusted by considering an estimated amount of phase delay appearing in a processing circuit for a video signal. Finally, hence, it is necessary to implement fine adjustment by using a filter provided in the processing circuit.

This conventional method, however, makes it possible to fine adjust a signal phase extending for up to several hundreds nano seconds. To process a digital signal to be used in future, it is necessary to correct a signal phase extending for at least several micro seconds. That method, hence, is not effective enough to process the digital signal.

An illustration of this conventional method can be found in US-A-4 222 074.

### SUMMARY OF THE INVENTION

It is an object of the present invention to provide an automatic phase adjustor for a video camera which is capable of correcting whatever phases in accordance with the phase-correcting amount freely set from the external.

In carrying out the object, the automatic phase adjustor according to the invention includes a first counter for generating a first pulse for driving an imaging element, a second counter for generating a synchronous signal and a pulse, having a predetermined phase relation, a gate circuit for gating an original clock and inputting it to both of the counters, a phase shifter for generating a second pulse, the second pulse corresponding to the first pulse delayed by an amount of delay appearing in a video signal processing circuit for a video signal from the imaging element, and a phase comparator for comparing said second pulse sent from the phase shifter with the pulse sent from the second counter. The gate circuit is controlled in accordance with an error signal output from the phase comparator so that it may automatically adjust a horizontal phase difference between a video signal sent from the imaging element and a synchronous signal sent from the second counter by interrupting feeding the original clock either to the first or to the second counter.

The automatic phase adjustor constructed as above functions as follows. The pulse sent from the first counter is delayed by the amount of delay appearing in the video-signal processing circuit and then is input to the phase comparator. In the phase comparator, the delayed pulse is compared with the pulse sent from the second counter. As a result, the first pulse for driving the imaging element can be shifted to the forward by the amount of the delay. Hence, the video signal output from the imaging element is also shifted to the forward. It means that the phase matching has been terminated when the video signal output from the imaging element is combined with the synchronous signal in the video-signal processing circuit. The resulting video synchronous signal constantly keeps an optimal phase.

### BRIEF DESCRIPTION OF THE DRAWINGS

Fig. 1 is a schematic block diagram showing an automatic phase adjustor for a video camera according to an embodiment of the present invention; and

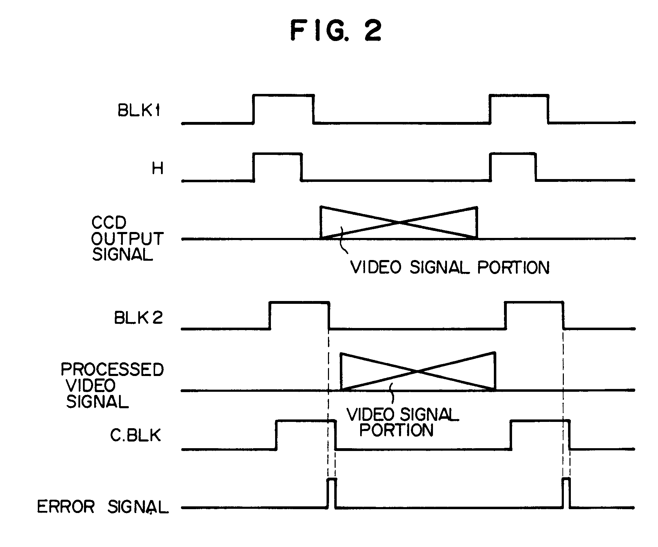

Fig. 2 is a timing chart showing a phase relation between an output signal of an imaging element and driving pulses included in the embodiment shown in Fig. 1.

### DESCRIPTION OF THE PREFERRED EMBODIMENTS

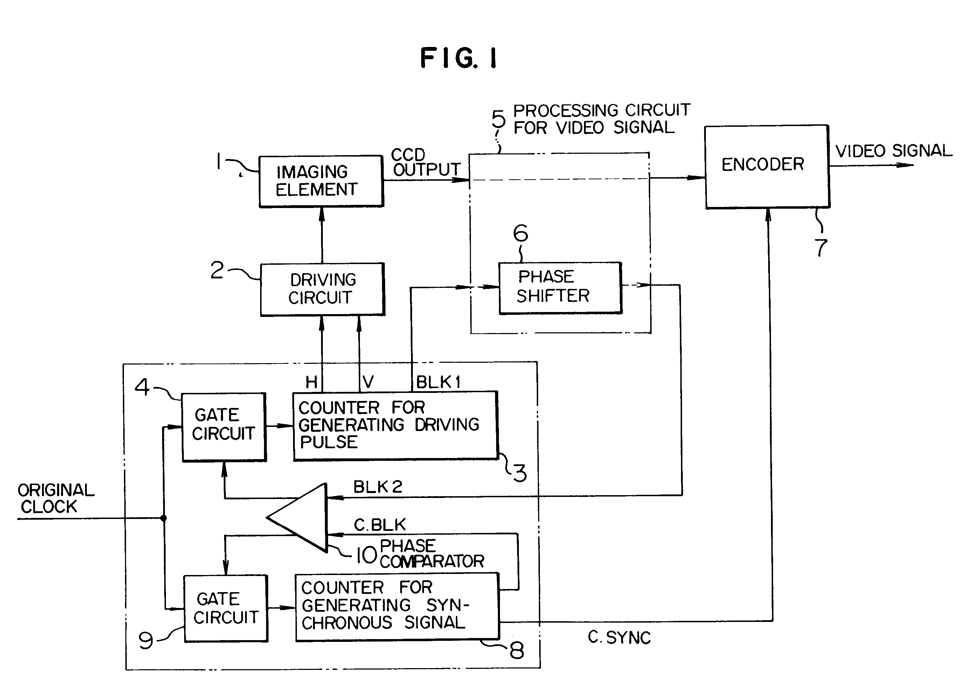

Fig. 1 is a block diagram showing an embodiment of the invention. As shown, 1 is a solid-state imaging element (CCD). 2 is a circuit for driving the imaging element 1. 3 is a counter for a pulse for driving the imaging element. The counter 3 serves to send the high and low driving pulses to the driving circuit 2. 4 is a gate circuit for passing an original clock for generating the pulse of the counter 3 therethrough. 5 is a processing circuit for a video signal, where the video signal output from the imaging element 1 is normally phase-delayed. 6 is a phase shifter for delaying an input pulse by the amount of delay appearing in the processing circuit 5. 7 is an encoder in which a chroma synchronous (C. SYNC) signal is combined with the video signal and the combined signal is output as a new video signal. 8 is a counter for generating a synchronous signal. 9 is a gate circuit for passing an original clock for driving the counter 8. 10 is a phase comparator in which a blanking pulse 2 (BLK 2) output from the phase shifter 6 is compared in phase with a composite blanking pulse (C. BLK) generated in the counter 8 for generating a phase-advancing or phase-delaying error signal. The phase-delaying signal is used as a gate pulse for the gate circuit 9 and the phase-advancing signal is used as a gate pulse for the gate circuit 4.

In turn, the description will be directed to how the embodiment functions. The counter 3 supplies the pulse to the driving circuit 2 so that the driving circuit 2 can drive the imaging element 1. Then, the imaging element provides a horizontal pulse from the counter 3 and a CCD output signal whose phase is fixed. The counter 3, on the other hand, creates a blanking pulse 1 whose phase is the same as the horizontal pulse. The blanking pulse 1 is sent to the phase shifter 6. The CCD output signal is sent to the processing circuit 5 in which the signal is delayed. The phase shifter 6 generates a blanking pulse 2 which corresponds to the blanking pulse 1 delayed by the same amount of delay as the CCD output signal. The blanking pulse 2 is sent to the phase comparator 10. The blanking pulse 2 has the same width as the composite blanking pulse generated in the counter 8. The phase comparator 10 serves to compare the leading phase of the blanking pulse 2 with that of the composite blanking pulse and generate as an error signal the phase-delaying signal or the phase-advancing signal about the blanking pulse 2 compared to the composite blanking pulse. The phase-delaying signal is input to the gate signal 9 as a clock gate signal used in the counter 8. The phase-advancing signal is input to the gate circuit 4 as a clock gate signal used in the counter 3. Based on the error signal, the counter 3 or 8 is interrupted for the time corresponding to the advance or the delay of the phase in order that the error signal reaches zero. That is to say, the counter 3 or 8 is operated so as to match the phase of the blanking pulse 2 to that of the composite blanking pulse. The chroma synchronous signal has a predetermined phase relation with the composite blanking pulse, because both of the signals are generated from the counter 8. Finally, the encoder 7 serves to output the video signal and the chroma synchronous signal as keeping both in the optimal phase.

As set forth above, the foregoing embodiment makes it possible to properly adjust the phase delay of the phase shifter 6 as matching to the amount of delay appearing in the processing circuit 5 however delayed the video signal is in the processing circuit 5. Hence, the phase matching can be freely carried out in accordance with the phase-correcting amount freely set from the external. This means that the embodiment may apply to various signal processing systems.

## Claims

1. An automatic phase adjustor for a video camera comprising:
a first counter (3) for generating a first pulse for driving an imaging element (1);
a second counter (8) for generating a synchronous signal and a pulse, having a predetermined phase relation;
a gate circuit (4, 9) for gating an original clock and inputting the original clock to said counters;
a phase shifter (6) for generating a second pulse, said second pulse corresponding to said first pulse delayed by the amount of delay appearing in a processing circuit (5) for a video signal from the imaging element;
a phase comparator (10) for comparing said second pulse sent from said phase shifter (6) with the pulse generated in said second counter (8)
said gate circuit (4, 9) being controlled in accordance with an error signal output as an error signal from said phase comparator (10) for automatically adjusting a horizontal phase difference between a video signal from said imaging element and the synchronous signal sent from said second counter (8), by interrupting feeding the original clock either to the first or to the second counter.

2. An automatic phase adjustor according to Claim 1, wherein if a phase delay is found when observing a phase difference between the pulse of said second counter (8) and said second pulse, said second counter (8) is interrupted for a time corresponding to the error signal or if a phase advance is found, said first counter (3) is interrupted for a time corresponding to the error signal.

## Patentansprüche

1. Automatische Phaseneinstelleinrichtung für eine Videokamera mit:
einem ersten Zähler (3) zum Erzeugen eines ersten Pulses zum Ansteuern eines Bildgebungselements (1);
einem zweiten Zähler (8) zum Erzeugen eines synchronen Signals und eines Pulses mit einer vorbestimmten Phasenbeziehung;
einer Gate-Schaltung (4, 9) zum Gate-Steuern eines Originaltaktes und Eingeben des Originaltaktes in die Zähler;
einem Phasenschieber (6) zum Erzeugen eines zweiten Pulses, der dem um den Betrag der in einer Verarbeitungsschaltung (5) für ein Videosignal aus dem Bildgebungselement auftretenden Verzögerung verzögerten ersten Puls entspricht;
einem Phasenkomparator (10) zum Vergleichen des von dem Phasenschieber (6) gesendeten zweiten Pulses mit dem in dem zweiten Zähler (8) erzeugten Puls,
wobei die Gate-Schaltung (4, 9) entsprechend einem von dem Phasenkomparator (10) als Fehlersignal ausgegebenen Fehlersignal zum automatischen Einstellen einer Horizontalphasendifferenz zwischen einem Videosignal aus dem Bildgebungselement und dem von dem zweiten Zähler (8) gesendeten Synchronsignal durch Unterbrechen des Zuführens des Originaltaktes entweder zu dem ersten oder zu dem zweiten Zähler gesteuert ist.

2. Automatische Phaseneinstelleinrichtung nach Anspruch 1, bei der der zweite Zähler (8), wenn beim Beobachten einer Phasendifferenz zwischen dem Puls des zweiten Zählers (8) und dem zweiten Puls eine Phasenverzögerung gefunden wird, für eine dem Fehlersignal entsprechende Zeit unterbrochen wird oder, wenn eine Phasenvoreilung gefunden wird, der erste Zähler (3) für eine dem Fehlersignal entsprechende Zeit unterbrochen wird.

## Revendications

1. Dispositif de réglage automatique de phase pour une caméra vidéo comprenant :
un premier compteur (3) pour engendrer une première impulsion pour commander un capteur vidéo (1);
un second compteur (8) pour engendrer un signal synchrone et une impulsion ayant une relation de phase prédéterminée;
un circuit porte (4, 9) pour transmettre sous commande un signal original d'horloge et pour envoyer ce signal d'horloge, comme signal d'entrée, auxdits compteurs;
un déphaseur (6) pour engendrer une seconde impulsion, ladite seconde impulsion correspondant à ladite première impulsion retardée du temps de retard apparaissant dans un circuit (5) de traitement d'un signal vidéo provenant du capteur vidéo;
un comparateur de phase (10) pour comparer ladite seconde impulsion émise par ledit déphaseur (6) à l'impulsion engendrée dans ledit second compteur (8);
ledit circuit porte (4, 9) étant commandé conformément à un signal d'erreur émis en tant que signal d'erreur par ledit comparateur de phase (10), afin de régler automatiquement une différence de phase horizontale entre un signal vidéo provenant dudit capteur vidéo et le signal synchrone émis par ledit second compteur (8), en interrompant l'envoi du signal original d'horloge soit au premier soit au second compteur.

2. Dispositif de réglage automatique de phase selon la revendication 1, dans lequel, si l'on trouve un retard de phase lorsqu'on observe une différence de phase entre l'impulsion dudit second compteur (8) et ladite seconde impulsion, ledit second compteur (8) est arrêté pendant un temps correspondant au signal d'erreur, ou si l'on trouve une avance de phase, ledit premier compteur (3) est arrêté pendant un temps correspondant au signal d'erreur.
